# EUROPEAN PATENT APPLICATION

(11) **EP 2 654 255 A1**
(43) Date of publication of application: **23.10.2013**
(21) Application number: 11849882.3
(22) Date of filing: 14.12.2011
(51) Int. Cl.: H04L 12/56, H04L 12/46

(54) **SWITCHING DEVICE, HIGHER-ORDER DEVICE THEREOF, NETWORK AND PACKET TRANSFER METHOD**

(30) Priority: 16.12.2010 JP 2010280600
(71) Applicant: NEC Corporation, Tokyo 108-8001 (JP)
(72) Inventor: YAMASHITA, Atsuya, Tokyo 108-8001 (JP)
(74) Representative: Reeve, Nicholas Edward
(86) International application number: PCT/JP2011/078940
(87) International publication number: WO 2012/081631

(57) **Abstract**

A switching device that, despite its simplified configuration, implements packet forwarding based on an IP address, in particular a multicast IP address, is disclosed. The switching device includes a plurality of input/ output ports, a forwarding table that correlates the IP address with the port via which a packet having the IP address as a destination is to be output, and a packet send/ receive controller. The packet send/ receive controller references the forwarding table to forward a received packet via the port correlated with the destination IP address of the received packet. The packet send/ receive controller updates the forwarding table as to a source IP address of the received packet and as to a port that received the packet. A plural number of ports may be correlated with a single IP address in the forwarding table. In case the plural number of the ports are correlated with the single IP address, the packet send/ receive controller forwards the received packet via the correlated plural number of the ports.

## Description

### TECHNICAL FIELD

### (REFERENCE TO RELATED APPLICATION)

The present application is based upon and claims the benefit of the priority of Japanese patent application No. 2010-280600 filed on December 16, 2010, the disclosure of which is incorporated herein in its entirety by reference thereto.
This invention relates to a switching device, its upper-order device, a network and a packet forwarding method. More particularly, it relates to a switching device, its upper-order device, a network and a packet forwarding method, in which a packet is forwarded as the information of the Layer 3 (network layer) of the OSI (Open Systems Interconnection) reference model.

### BACKGROUND

Patent Literature 1 shows a Layer 2 switch that implements the function of determining an output port based on an IP address using a lesser volume of resources. It is noted that the Layer is indicated below as L to denote a Layer 3 as L3 and a Layer 2 as L2. Specifically, the Patent Literature shows a configuration including an FDB (Forwarding Data Base) 123, an FDB referencing unit 121 and an output port deciding unit 122. The FDB manages a plurality of input and output ports and pre-set IP addresses as each of the input and output ports is correlated with a specified IP address. If the input transmission information, delivered to one of the input and output devices, includes an IP address as destination, the FDB referencing unit 121 and the output port deciding unit 122 check to see whether or not the IP address as the destination of the input transmission information contained in the input transmission information coincides with a pre-set IP address correlated by the FDB 123 for the input or output unit different from the input or output unit the input transmission information was delivered to. In case the FDB referencing unit 121 and the output port decision unit 122 should conclude that IP address as the destination of the input transmission information coincides with the above mentioned pre-set IP address, the output port deciding unit 122 takes the input or output unit, correlated with the pre-set IP address by the FDB 123, to be an output destination of the input transmission information.

Non-Patent Literatures 1 and 2 show a technique, known as OpenFlow, according to which an OpenFlow controller updates a flow table, maintained by each of a set of the switches, to exercise centralized control for the switch set. Pertinence of thee technique to the present invention will be discussed in detail subsequently.

### CITATION LIST

### PATENT LITERATURE

[PTL 1]
   JP Patent Kokai Publication No. JP2009-260873A

### NON PATENT LITERATURE

[NPL 1] Nick McKeown and seven others: "OpenFlow: Enabling Innovation in Campus Networks", [online], [retrieved on December 1, H22 (2010), Internet <URL: http://www.openflowswitch.org/document/openflow-wp-latest.pdf>
[NPL 2]
   "OpenFlow Switch Specification" Version 1.0.0. (Wire Protocol 0x01), [online], [retrieved on December 1, H22 (2010), Internet <URL: http://www.openflowswitch.org/documents/openflow-spec-v1.0.0.pdf>

### SUMMARY

### TECHNICAL PROBLEM

The disclosures of the above mentioned Patent and Non-Patent Literatures are to be incorporated herein by reference.
The following analysis is made by the present invention.
The configuration of the above mentioned Patent Literature manages the relationship of coincidence between the IP addresses and the input/ output units by correlating them by one-to-one correspondence (see paragraph 0022 and Fig.4 of the corresponding gazette). The technique of the above mentioned Patent Literature thus suffers a problem that multicast IP addresses may not be coped with.

The present invention has been made with the above mentioned status of the art in mind. It is an object of the present invention to provide a switching device that is able to forward packets based on an IP address despite its simple configuration as well as to cope with a multicast IP address. It is also aimed at by the present invention to provide an upper order device, a network and a method for forwarding a packet.

### SOLUTION TO PROBLEM

In a first aspect, the present invention provides a switching device comprising a plurality of input/ output ports, a forwarding table that correlates an IP address with the port via which a packet having the IP address as a destination is to be output, and a packet send/ receive controller. The packet send/ receive controller references the forwarding table to forward a received packet via the port correlated with the IP address which is the destination of the received packet. The packet send/ receive controller also updates the forwarding table as to a source IP address of the received packet and a port that received the packet. A plural number of the ports may be correlated with a single IP address in the forwarding table. In case the plural number of the ports are correlated with the single IP address, the packet send/ receive controller forwards the received packet via the correlated plural number of the ports.

In a second aspect, the present invention provides a switching device which, if no entry coinciding with the destination IP address of the received packet has been found in the forwarding table, inquires at an upper order device, via a communication unit, for an entry that is to be set in the forwarding table. The switching device updates the forwarding table based on a response from the upper order device. The present invention also provides the upper order device that returns an entry to be set in the forwarding table of the switching device.

In a third aspect, the present invention provides a network including the above mentioned switching device.

In a fourth aspect, the present invention provides a method for forwarding a packet comprising a step of a switching device, provided with a plurality of input/ output ports and with a forwarding table that correlates a multicast IP address with a plural number of the ports via which packets having the multicast IP address as destinations are to be output, referencing the forwarding table to forward a received packet via the plural number of the ports correlated with the multicast IP address as set in a destination IP address of a received packet, and
a step of the switching device updating the forwarding table as to a source IP address of the received packet and as to the port that has received the packet. The present method is bound up with a specifically machine which is the switching device that forwards the received packet

### ADVANTAGEOUS EFFECTS OF INVENTION

According to the present invention, it is possible to forward packets by a simplified configuration based on an IP address, in particular a multicast IP address.

### BRIEF DESCRIPTION OF THE DRAWINGS

Fig.1 is a schematic block diagram for illustrating schematics of the present invention.
Fig.2 is a schematic block diagram for illustrating a configuration of a switching device according to an exemplary embodiment 1 of the present invention.
Fig.3 shows am example forwarding table maintained in the switching device of the exemplary embodiment 1 of the present invention.
Fig.4 is a diagrammatic view for illustrating the operation (the operation during ordinary forwarding) of the switching device of the exemplary embodiment 1 of the present invention.
Fig.5 is a diagrammatic view for illustrating the operation (the operation during flooding) of the switching device of the exemplary embodiment 1 of the present invention.
Fig.6 is a diagrammatic view for illustrating the operation (the operation during the time of an active filtering function) of the switching device of the exemplary embodiment 1 of the present invention.
Fig.7 is a schematic block diagram for illustrating a configuration of a switching device according to an exemplary embodiment 2 of the present invention.

### DESCRIPTION OF EMBODIMENTS

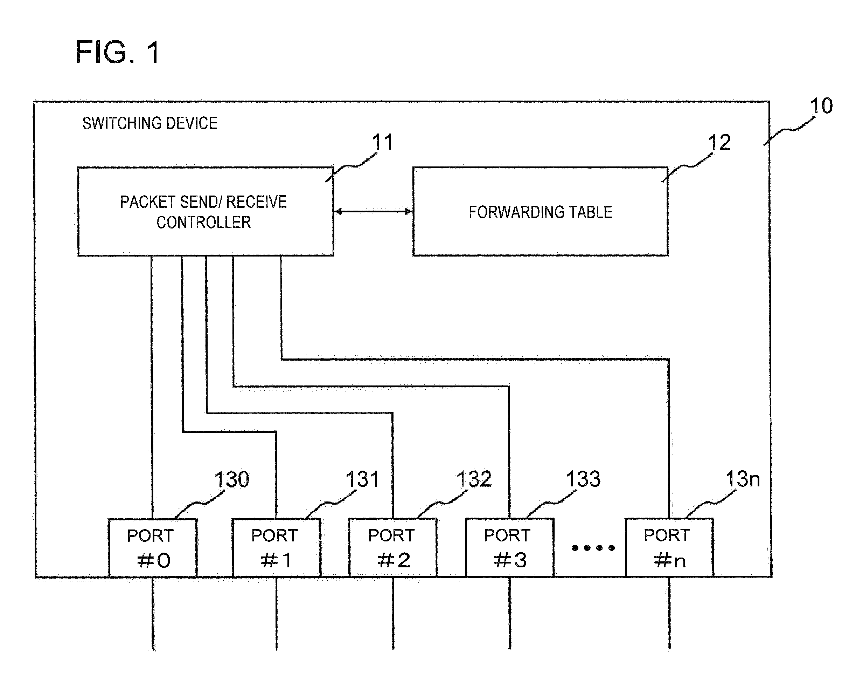

Initially, the schematics of an exemplary embodiment of the present invention will be explained. Referring to Fig.1, the switching device includes a plurality of input/ output ports (130 to 13n), a forwarding table 12 that correlates an IP address with the port via which a packet having the IP address as a destination is to be output, and a packet send/ receive controller 11. The packet send/ receive controller references the forwarding table 12 to forward a received packet via the port correlated with the IP address which is the destination of the received packet. The packet send/ receive controller also updates the forwarding table 12 as to a source IP address of the received packet and as to a port that received the packet. A plural number of ports may be correlated with a single IP address in the forwarding table 12. In case the plural number of the ports are correlated with the single IP address, the packet send/ receive controller 11 forwards the received packet via the correlated plural number of the ports. Note that reference symbols, attached to the above schematics, are only by way of illustration to assist in the understanding, and are not intended to limit the present invention to the mode shown.

With the switching device of the present invention, described above, it is possible to cope with a multicast address provided in each of IPv4 and IPv6.

### [Exemplary embodiment 1]

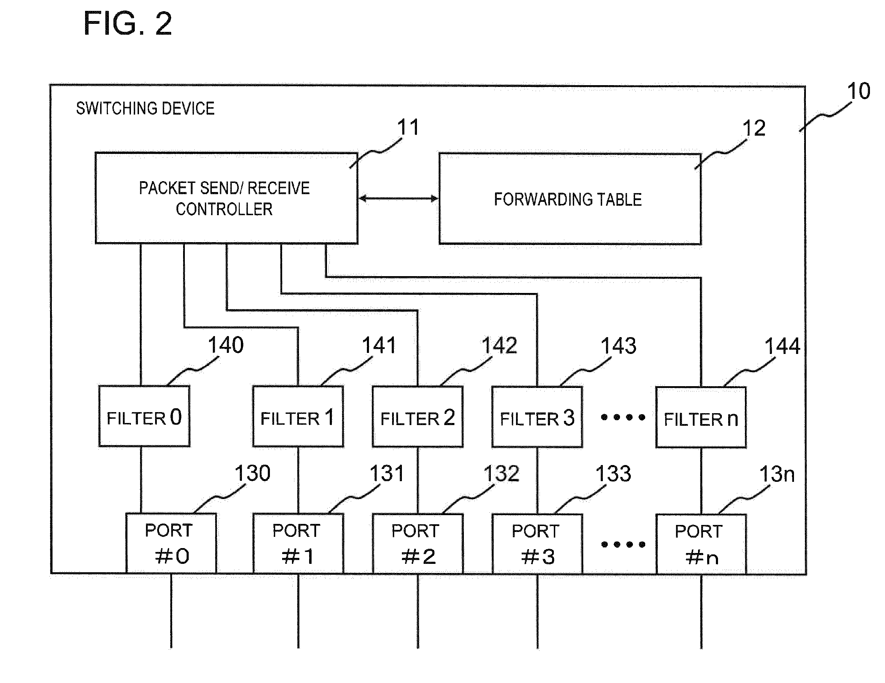

An exemplary embodiment 1 according to the present invention will now be described in detail by referring to the drawings. Fig.2 shows a configuration of a switching device 10 according to the exemplary embodiment 1. Referring to Fig.2, there is shown a configuration including a packet send/ receive controller 11, a forwarding table 12, a plurality of input/ output ports 130 to 13n, and a plurality of filters 140 to 14n respectively associated with the input/ output ports 130 to 13n. Note that a converter for analog-digital converting data input to or output from the input/ output ports 130 to 13n is not shown in Fig.2.

An n-number, n being a natural number, of the input/ output ports 130 to 13n are connected to another switching device or to an external host device to input/ output IP packets as well as ARP packets. There is no limitation to the sorts of the interfaces used, such that these interfaces may be of any suitable pre-existing standards, such as copper interfaces or optical interfaces.

The filters 140 to 14n are used to filter the packets, sent from the packet send/ receive controller 11 to the input/ output ports 130 to 13n, based on the on/off setting thereof. In more detail, each of the filters 140 to 14n includes, to represent a subnet address, such as10.11.12.xx in the case of IPv4, an area in which to store an IP address and an area in which to store a subnet mask. If the filters are on, the IP packets with the destination IP addresses corresponding to the subnet address, sent from the packet send/ receive controller 11, are allowed to pass through the filters. If otherwise, the IP packets are dropped. If the filters 140 to 14n are off, they perform no filtering operations, and allow the IP packets, sent from the packet send/ receive controller 11, to pass through. These filters 140 to 14n may be built-in as an inner block of an LSI (Large Scale Integration) on which there are already built-in the packet send/ receive controller 11 and the forwarding table. Note that the setting for on/off or the filtering range of the filters 140 to 14n may be altered via e.g., the packet send/ receive controller 11.

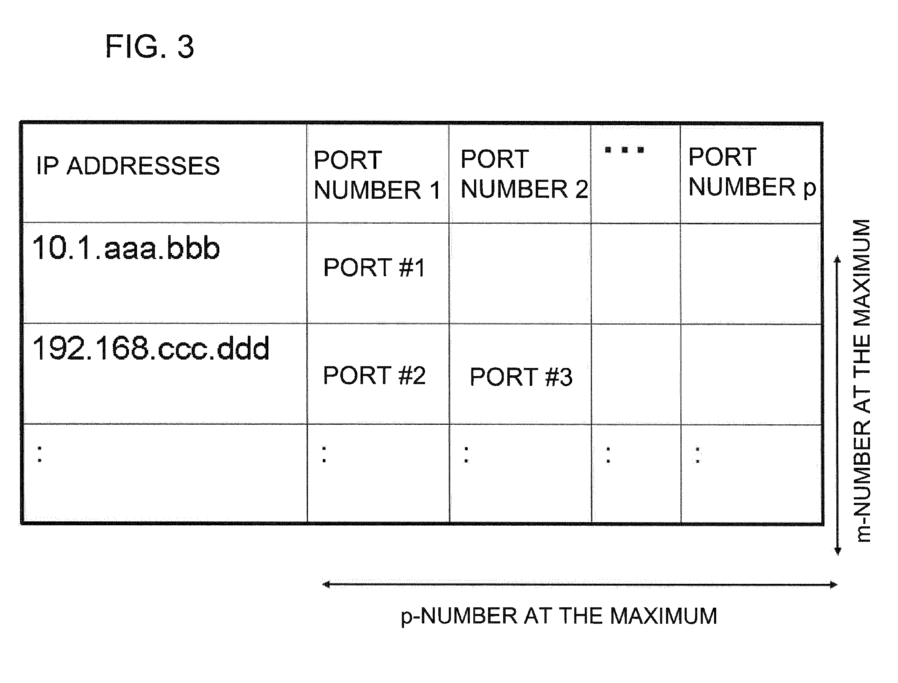

The forwarding table 12 is a memory capable of having a maximum m-number, m being a natural number, of IP address entries, as shown in Fig.3. Each entry may hold a maximum p-number, where p ≤ n, of port numbers per IP address.

The packet send/ receive controller 11 retrieves the forwarding table 12, using a destination IP address portion of the packet received from each of the filters 140 to 14n. If, as a result of the retrieval, an entry of an IP address, which is the same as the destination IP address, is found (hit), the packet send/ receive controller 11 sends the received packet to one or more ports recorded as a set with the so found IP address. If, as the result of the above retrieval, no entry of the IP address, which is the same as the destination IP address, is found (miss), the packet send/ receive controller 11 broadcasts the received packet to the total of the output ports.

In addition, the packet send/ receive controller 11 updates the forwarding table 12, regardless of whether or not the relevant entry has been found by the above retrieval, as the source IP address of the received packet and the port number of the port that received the packet are associated with each other as a set. In more detail, if the source IP address has not been registered in the forwarding table 12, the packet send/ receive controller 11 adds the set as a new entry. If the source IP address has been registered in the forwarding table 12, and a different port number has already been registered, the packet send/ receive controller 11 adds the port number, received this time, to the relevant entry.

If, in the above mentioned processing by the packet send/ receive controller 11, the packet being handled is an ARP packet, the packet has a different location in which to store the destination IP address and a different location in which to store the source IP address. It is therefore necessary to carry out exceptional processing of changing an address referencing site.

The above mentioned processing carried out in the packet send/ receive controller 11 in determining the output port or in updating the forwarding table is substantially the same as frame transfer, learning or flooding performed by the ordinary L2 switching device. Hence, explanation of details of the processing is dispensed with.

The operation of the switching device of the present exemplary embodiment will now be explained in detail by referring to the drawings.

### [Operation during the normal forwarding operation]

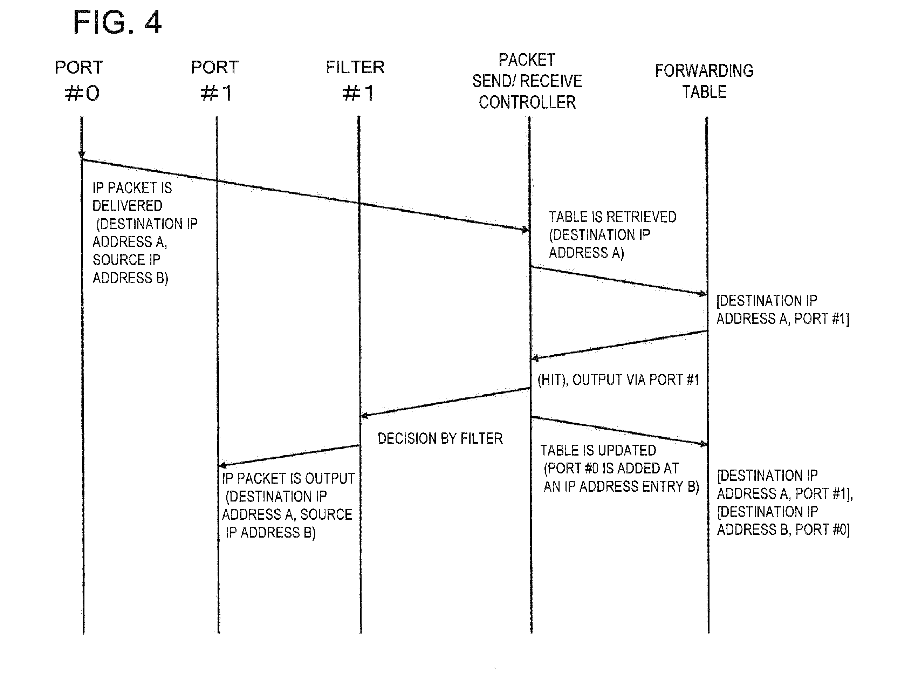

Fig.4 shows the operation of the switching device of the exemplary embodiment 1 of the present invention (the operation during the normal forwarding). In the following explanation, it is assumed that a packet having a destination IP address A and a source IP address B has been delivered to the switching device 10.

If the packet having the destination IP address A and the source IP address B has been delivered to a port of the switching device 10 (port #0 in Fig.4), as shown in Fig.4, the packet send/ receive controller 11 retrieves, from the forwarding table 12, an entry having such destination IP address (see 'Table retrieval' of Fig.4).

It is now assumed that such an entry that correlates the IP address A with the port #1 has been registered in the forwarding table 12.

In this case, the output destination of the packet in question is the port #1. The packet send/ receive controller 11 outputs the packet to the filter #1 the port #1 is connected to.

It is assumed that, in the example of Fig.4, the filter #1 is off, or that the subnet address, set in the filter #1, coincides with the destination IP address of the received packet. In this case, the packet is output via the port #1, as shown in Fig.4.

On the other hand, the packet send/ receive controller 11 updates the forwarding table 12 as to the source IP address and the input port (port #0) of the packet. As a result, a new entry that correlates the IP address B and the port #0 to each other is added to the forwarding table 12.

### [Operation during flooding]

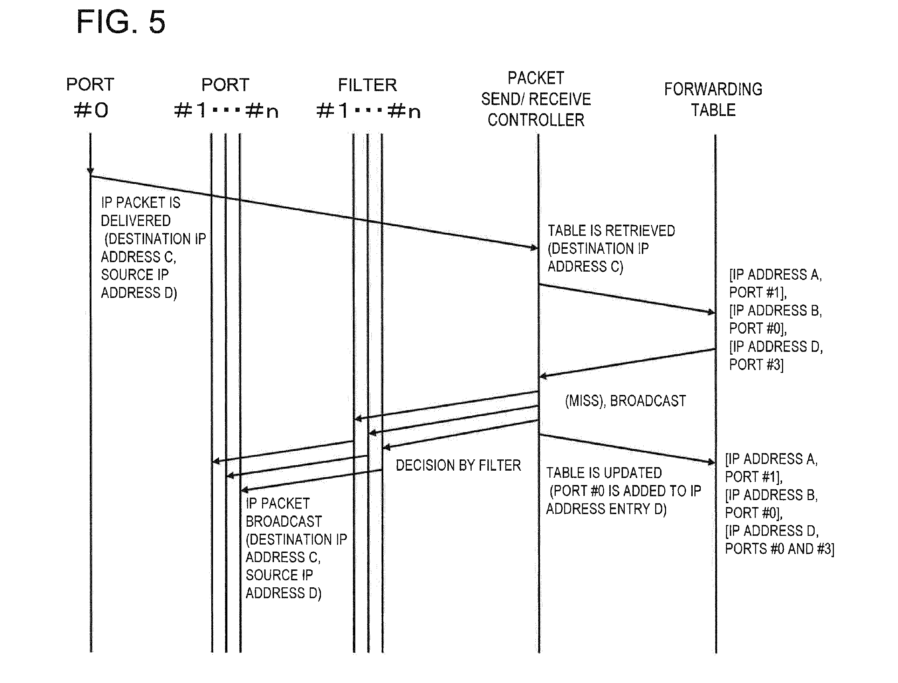

Fig.5 shows the operation during the flooding of the above described switching device. In the explanation to follow, it is assumed that an unknown packet, having a destination IP address C and a source IP address D, has been delivered to the switching device 10.

If the packet, having the destination IP address C and the source IP address D, has been delivered to a port of the switching device 10 (port #0 in Fig.5), as shown in Fig.5, the packet send/ receive controller 11 retrieves, from the forwarding table 12, an entry having the destination IP address ('Table retrieval' of Fig.5).

It is now assumed that an entry correlating the IP address A with the port #1, an entry correlating an IP address B with the port #0 and an entry correlating the IP address D with the port #3 have been registered in the forwarding table 12.

In such case, it is not possible to retrieve the entry, having the destination IP address C, from the forwarding table 12. The packet send/ receive controller 11 thus broadcasts the packet via the total of the ports except the port #0 (the ports #1 to #n of Fig.5) by way of flooding.

In the example of Fig.5, it is assumed that the filters #1 to #n are off, or that the subnet address, set in each of the filters #1 to #n, coincides with the destination IP address of the received packet. In such case, the packet is output via the ports #1 to #n, as shown in Fig.5.

On the other hand, the packet send/ receive controller 11 updates the forwarding table 12, as to the source IP address and the input port (port #0) of the packet, as a result of which the port #0 is newly added to the entry of the IP address D in the forwarding table 12.

### [Operation during the active filtering function]

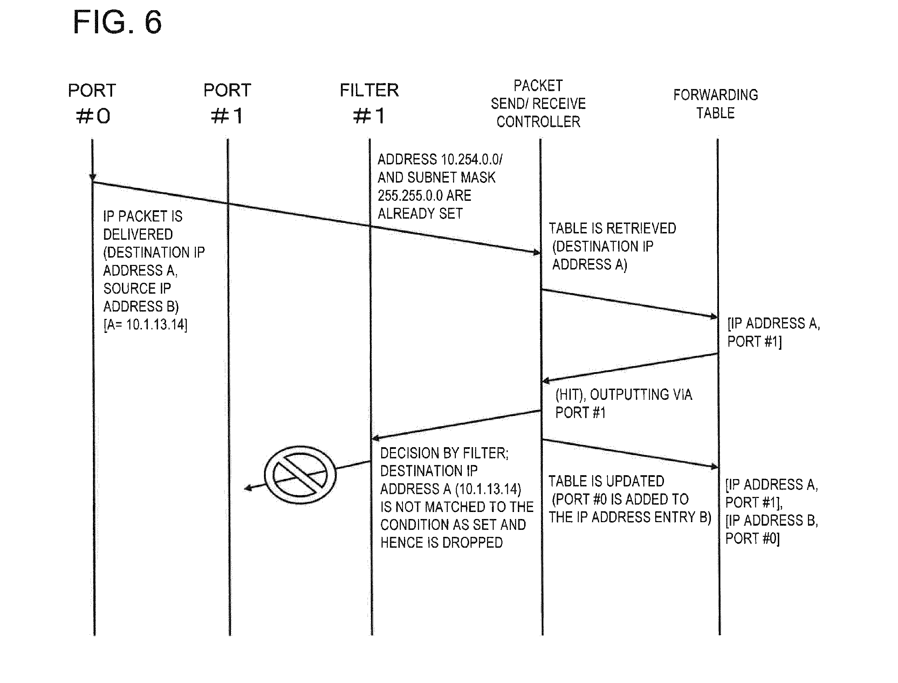

Fig.6 illustrates the operation of the switching device of the exemplary embodiment 1 of the present invention (the operation during the active filtering function). Also, in the following explanation, it is assumed that a packet having a destination IP address A of 10.1.13.14 and a source IP address B, has been delivered to the switching device 10. It is also assumed that the port #1 has been connected to an upper order device no broadcast packet is to be forwarded to. It is moreover assumed that, for this reason, the filtering function for the filter #1 has been set to 'on' state, and that an IP address of 10.254.0.0 as well as a subnet mask 255.255.0.0 have been set in the filter.

The operation until a received packet is delivered to the packet send/ receive controller 11, and the packet send/ receive controller 11 determines, as a result of retrieval of the forwarding table, that the received packet is to be output via the port #1, is the same as that shown inFig.4.

When supplied with the packet from the packet send/ receive controller 11, the filter #1 collates the destination IP address (10.1.13.14) of the delivered packet to the subnet address 10.254.xxx.xxx as set in the filter itself. The packet delivered from the packet send/ receive controller 11 is not matched to the subnet address as set in the filter #1. Hence, the filter #1 drops the packet delivered thereto from the packet send/ receive controller 11.

On the other hand, the packet send/ receive controller 11 updates the forwarding table 12 as to the source IP address B and the input port (port #0) of the received packet, regardless of whether or not the packet the packet send/ receive controller itself has output has been dropped.

Thus, with the switching device 10 of the exemplary embodiment 1 of the present invention, it is possible to perform Layer 3 switching by the forwarding processing equivalent to that performed by the Layer 2 switching device, as indicated in Fig.4 for the operation during normal forwarding and in Fig.5 for that during flooding. Moreover, since a plurality of destination ports can be stored in the forwarding table 12, it is possible to handle a multicast IP address. It is noted that entries having multicast IP addresses may be registered beforehand in the forwarding table 12. Or, those entries may be set from an upper order device, as explained later in connection with an exemplary embodiment 2 to follow.

In the exemplary embodiment, described above, the filters 141 to 14n are provided for the respective ports and may be turned on/off, or a subnet address may be set, as necessary. There is thus no risk that broadcast packets are sent to an upper order device. Note that, in the example of Fig.2, the filters 141 to 14n are provided for the respective ports, however, it is also possible to decide on a port to be connected to the upper order device and to install the filter just for such port.

In the exemplary embodiment, no MAC (Media Access Control) address is referenced as the information, as is done in the pre-existing L2 switch. There is thus no necessity to support e.g., MACinMAC as in the case of the pre-existing L2 switch adapted to cope with a wide-area LAN.

In case the switching device 10 of the above described exemplary embodiment is arranged in a network having a looped path, such as a path of a meshed structure, a broadcast storm may be encountered. If the switching device 10 is connected to such network, a spanning tree protocol is desirably implemented to effect routing to construct a logical hub-spoke network in a manner similar to the Layer 2 switching device. This spanning tree protocol is well-known to those skilled in the art and is outside the scope of the present invention so that it is not here explained in detail. Of course, if the switching device 10 is connected to the hub-spoke configuration network, it is unnecessary to use the above mentioned precautions.

### [Exemplary embodiment 2]

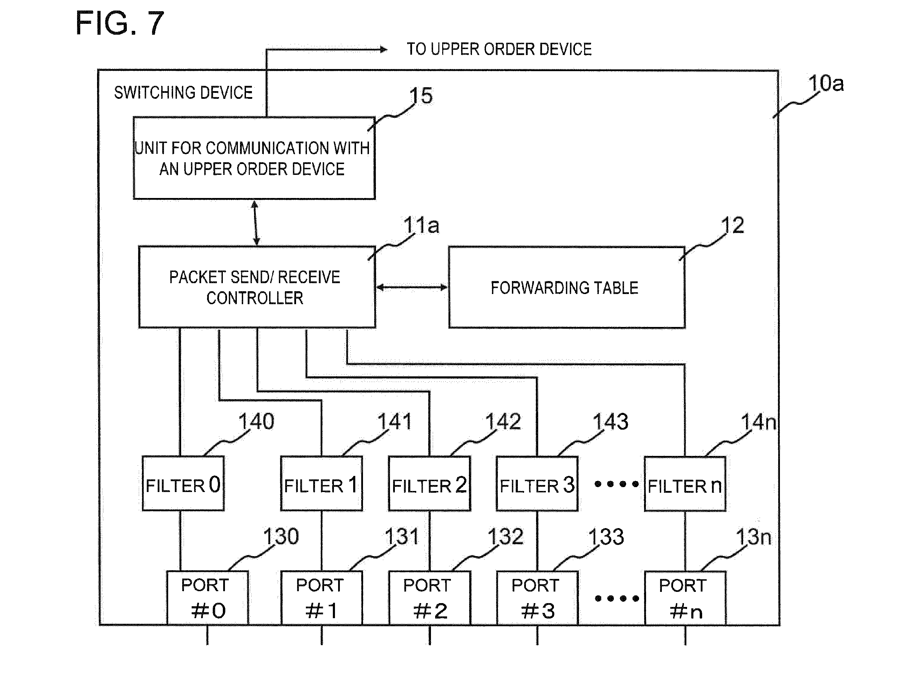

An exemplary embodiment 2 of the present invention will now be explained in detail with reference to the drawings. Fig.7 illustrates a configuration of a switching device 10a of the exemplary embodiment 2 of the present invention. The principal difference of the present exemplary embodiment from the switching device 10 of the exemplary embodiment 1 shown in Fig.2 is that a packet send/ receive controller 11a operates in a different manner from the previous exemplary embodiment and in that there is newly added an unit for communication with an upper order device 15. Since the present exemplary embodiment is otherwise similar in configuration to the exemplary embodiment 2, the following explanation is to be centered about these points of differences.

In the above described exemplary embodiment 1, a received packet is broadcast in case the result of retrieval of the forwarding table 12 by the packet send/ receive controller 11 indicates that there is no entry corresponding to the destination IP address of the received packet. In the instant exemplary embodiment, the packet send/ receive controller 11a performs the processing to request an entry corresponding to the destination IP address of the received packet from an upper order device via the unit for communication with an upper order device 15.

In response to the request from the packet send/ receive controller 11a, the unit for communication with an upper order device 15 requests an entry to be stored in the forwarding table from the upper order device, not shown, and from a pre-set protocol, also not shown. The unit for communication with an upper order device then performs the processing to transfer the received entry to the packet send/ receive controller 11a.

It is only sufficient that the upper order device is such a device capable of constructing an entry corresponding to the destination IP address, that is, capable of indicating, by way of a response, which one of the input/ output ports of the switching device 10a is proper to output the packet from.

For example, an OpenFlow controller, such as is disclosed in the Non-Patent Literatures 1, 2, may be used as the upper order device. Such OpenFlow controller has the function to respond to a request from switches placed under its control to construct a route based on the network topology. In such case, communication with the switching device 10a is by the OpenFlow protocol as upper order device. At this time, the switching device 10a receives, from the OpenFlow controller, a flow entry which is made up of collation rules (matching rules) to identify a flow in question and an action(s) providing for the contents of the processing to be applied to the flow. The collation rules form a set with the action(s), and the processing stated in the action may, for example, be forwarding the flow via one or more designated ports. The switching device 10a may then extract only necessary portions from the flow entry to register the so extracted necessary portions in the forwarding table 12.

The switching device 10a may be configured for satisfying the specifications of the OpenFlow switch of the Non-Patent Literature 2 to perform the both the operation of the above described exemplary embodiments 1 and 2 and the operation as the OpenFlow switch.

The above described unit for communication with an upper order device 15 may be implemented by loading a CPU (Central Processing Unit) and a memory on the switching device 10a to allow running a computer program that executes the processing of communication with the upper order device.

In the present exemplary embodiment, described above, it is possible to forward a packet to a proper destination, without performing the processing of flooding, with a degree of reliability that depends on that of the upper order device. The degree of reliability may be equivalent to or even higher than is possible with the Layer 3 switch. In the present exemplary embodiment, it is also possible to implement a function equivalent to IGMP snooping by allowing the upper order device to properly return an entry containing a plural number of input/ output ports.

In the explanation of the above exemplary embodiments, it is presupposed that the switching device 10a is provided with the filters 140 to 14n. Since it is possible to set entries for the forwarding table 12 from the upper order device to suppress the broadcast storm as well, the filters 140 to 14n may also be dispensed with.

Although the description has been made of preferred exemplary embodiments of the present invention, further modifications, substitutions or adjustments may be made without departing from the basic technical concept of the present invention. For example, the configuration of the forwarding table, shown in the above described exemplary embodiments, is merely illustrative and, if the relationship of correspondence between the IP address and one or more ports may be supervised by the configuration of the forwarding table used, there should be no limitations to the table configuration.

Also, in the explanation of the above described exemplary embodiments, it is presupposed that there is not provided an ageing function to wipe out the entries in the forwarding table 12 at an interval of a pre-set time. However, there may also be provided such function for the packet send/ receive controller 11 to wipe out old entries (entries having IP addresses for which no packets have been received for a pre-set time), like the ageing function in the Layer 2 switching device. In such case, it is possible to suppress unneeded forwarding by the old entries left in the forwarding table 12, thereby allowing for further improving the network performance.

However, in the above described exemplary embodiment 1, removal of the entries may lead to occurrences of broadcasts. It is thus desirable that the time of expiration, for example, can be altered in desired manner in response to network characteristics or using states.

In the above described exemplary embodiments, explanation has been made for the case of the IPv4 based IP addresses. However, the above explanation may of course apply to IPv6 as well.

Moreover, in the description of the above described exemplary embodiments, it is assumed that the filters 140 to 14n perform the filtering using the subnet address. However, the filter conditions may be set in desired manner depending on the particular device(s) connected to the respective ports. For example, for the port the upper order device is connected to, such a condition may be set that only a pre-set control packet is allowed to pass through.

Finally, preferred modes of the present invention are set out.
[Mode 1]
   (See the switching device according to the above mentioned first aspect)
[Mode 2]
   The switching device according to mode 1, wherein,
   in case no entry coincident with the destination IP address of the received packet has been found in the forwarding table, the packet send/ receive controller multicasts the received packet via ports other than the port that received the packet.
[Mode 3]
   The switching device according to mode 1 or 2, further comprising
   a filter unit between one or more of the input/ output ports and the packet send/ receive controller; the filter unit not allowing a packet other than the packet satisfying a pre-set condition to pass through.
[Mode 4]
   The switching device according to mode 1 or 2, further comprising
   a filter unit between one or more of the plurality of the input/ output ports and the packet send/ receive controller; the filter unit not allowing a packet other than the packet satisfying a pre-set condition to pass through; wherein,
   by giving a command to the packet send/ receive controller, on/off of the filter function and the filtering condition corresponding to the command may be set on the filter unit.
[Mode 5]
   The switching device according to any one of modes 1 to 4, wherein,
   the packet send/ receive controller removes, from the forwarding table, such an entry having an IP address for which no packet has been received for a pre-set time.
[Mode 6]
   The switching device according to mode 1, further comprising
   a communication unit that communicates with a second upper order device; wherein,
   if no entry coinciding with the destination IP address of the received packet has been found in the forwarding table, the packet send/ receive controller inquires at the second upper order device, via the communication unit, for an entry that is to be set in the forwarding table; the packet send/ receive controller updating the forwarding table based on a response from the second upper order device.
[Mode 7]
   The switching device according to mode 6, further comprising
   a filter unit between one or more of the plurality of the input/ output ports, connected to an upper order device, and the packet send/ receive controller; the filter unit not allowing a packet other than the packet having the preset IP address to pass through.
[Mode 8]
   The switching device according to mode 6, further comprising
   a filter unit between the plurality of the input/ output ports and the packet send/ receive controller; the filter unit not allowing a packet other than the packet having a pre-set IP address to pass through; wherein,
   by giving a command to the packet send/ receive controller, on/off of the filter function and the filtering condition corresponding to the command may be set on the filter unit.
[Mode 9]
   The switching device according to any one of modes 6 to 8, wherein
   the packet send/ receive controller removes, from the forwarding table, such an entry having an IP address for which no packet has been received for a pre-set time.
[Mode 10]
   (See the upper order device according to the above mentioned second aspect)
[Mode 11]
   (See the network according to the above mentioned third aspect)
[Mode 12]
   (See the method for forwarding a packet according to the above mentioned fourth aspect)
   Like the mode 1, each of the modes 10 to 12 may be extended in accordance with the modes 2 to 9.
   The particular exemplary embodiments or examples may be modified or adjusted within the gamut of the entire disclosure of the present invention, inclusive of claims, based on the fundamental technical concept of the invention. In addition, variegated combinations or selections of the elements disclosed in the present invention, inclusive of claim elements, elements of the respective exemplary embodiments or examples, or elements of the drawings, may be made within the concept of the claims. That is, the present invention may encompass various modifications or corrections that may occur to those skilled in the art within the gamut of the entire disclosure of the present invention, inclusive of claims and the technical concept of the present invention.

### REFERENCE SIGNS LIST

- 10, 10a: switching devices
- 11, 11a: packet send/ receive controllers
- 12: forwarding table
- 15: unit for communication with an upper order device
- 130 to 13n: input/ output ports
- 140 to 14n: filters

## Claims

1. A switching device comprising:
a plurality of input/ output ports;
a forwarding table that correlates an IP address with the port via which a packet having the IP address as a destination is to be output; and
a packet send/ receive controller that references the forwarding table to forward a received packet via the port correlated with the IP address which is the destination of the received packet; the packet send/ receive controller updating the forwarding table as to a source IP address of the received packet and as to a port that received the packet; wherein,
a plural number of the ports may be correlated with a single IP address in the forwarding table;
the packet send/ receive controller in case the plural number of the ports are correlated with the single IP address forwarding the received packet via the correlated plural number of the ports.

2. The switching device according to claim 1, wherein,
in case no entry coinciding with the destination IP address of the received packet is found in the forwarding table, the packet send/ receive controller multicasts the received packet via ports other than the port that received the packet.

3. The switching device according to claim 1 or 2, further comprising
a filter unit arranged between one or more of the input/ output ports and the packet send/ receive controller; the filter unit not allowing a packet other than the packet satisfying a pre-set condition to pass through.

4. The switching device according to claim 1 or 2, further comprising
a filter unit arranged between each of the plurality of the input/ output ports and the packet send/ receive controller; the filter unit not allowing a packet other than the packet satisfying a pre-set condition to pass through; wherein,
by giving a command to the packet send/ receive controller, on/off of the filter function and the filtering condition corresponding to the command may be set on the filter unit.

5. The switching device according to any one of claims 1 to 4, wherein,
the packet send/ receive controller removes, from the forwarding table, such an entry having an IP address for which no packet has been received for a pre-set time.

6. The switching device according to claim 1, further comprising
a communication unit that communicates with an upper order device; wherein,
if no entry coinciding with the destination IP address of the received packet has been found in the forwarding table, the packet send/ receive controller inquires at the upper order device, via the communication unit, for an entry that is to be set in the forwarding table; the packet send/ receive controller updating the forwarding table based on a response from the upper order device.

7. The switching device according to any claim 6, wherein,
the packet send/ receive controller removes, from the forwarding table, such an entry having an IP address for which no packet has been received for a pre-set time.

8. An upper order device that returns an entry to be set in the forwarding table of the switching device in response to a request from the switching device according to claim 6 or 7.

9. A network including the switching device according to any one of claims 1 to 7.

10. A method for forwarding a packet comprising
a step of a switching device, provided with a plurality of input/ output ports and with a forwarding table that correlates a multicast IP address with a plural number of the ports via which a packet having the multicast IP address as destinations is to be output, referencing the forwarding table to forward a received packet via the plural number of the ports correlated with the multicast IP address as set in a destination IP address of a received packet; and
a step of the switching device updating the forwarding table as to a source IP address of the received packet and as to the port that has received the packet.
